Europäisches Patentamt

European Patent Office

Office européen des brevets

(19)

(11) Publication number: **0 136 049**
A2

# (12) EUROPEAN PATENT APPLICATION

(21) Application number: **84305647.4**

(22) Date of filing: **20.08.84**

(51) Int. Cl.⁴: **B 60 B 35/10**

(30) Priority: **09.09.83 GB 8324234**

(43) Date of publication of application: **03.04.85**
**Bulletin 85/14**

(84) Designated Contracting States: **AT BE CH DE FR GB IT LI NL SE**

(71) Applicant: **Aerial Access Equipment Limited, North Tyne Industrial Estate Whitley Road, Longbenton Newcastle upon Tyne, NE12 9SZ Tyne and Wear (GB)**

(72) Inventor: **Stokoe, Ridley, 98 The Links, Whitley Bay Tyne & Wear (GB)**

(74) Representative: **Virr, Dennis Austin et al, Urquhart-Dykes & Lord Floor B Milburn House Dean Street, Newcastle upon Tyne NE1 1LE (GB)**

(54) Construction equipment.

(57) Construction equipment, for example access equipment having a working platform or cage which can be elevated, having wheels (2, 2) for towing, has provision for linear adjustment of one or more of the wheels (2, 2) in the direction of its axis, the wheels being securable in at least two positions of adjustment. Adjustment may be achieved by mounting each wheel (2) on a separate stub-axle (7) and locating the stub-axle (7) in a hollow member (8), within which it is a sliding fit. Adjustment of the wheels affords a relatively wide lateral wheel-base for towing stability and also permits the wheels to be retracted to within the limits of the equipment, for passage through narrow, e. g. domestic, spaces.

0136049

# CONSTRUCTION EQUIPMENT

This invention is concerned with construction equipment and more particularly with such equipment of such dimensions as to be suitable for domestic use.

Construction equipment of the type used in the building and allied industries, for example cranes and access equipment, has many advantages in use but has not been available in forms and dimensions suitable for the smaller-scale and domestic user. However there is a large potential demand for such smaller equipment, enhanced by the growth of the "do-it-yourself" market.

One of the problems associated with the use of construction equipment by the domestic user is that, since he will use such equipment only occasionally and must therefore rely upon hiring the equipment from a supplier, the equipment must be mobile or portable yet must still be both compact and stable in use. For example, if the equipment is to be designed to be suitable for towing behind a car or other vehicle, it must on the one hand be stable enough to be safe for towing but must on the other hand be compact enough to permit access to domestic gardens and/or interiors.

An object of the present invention is to provide construction equipment which meets these conflicting needs.

According to the invention, in construction equipment provided with wheels to render it towable, at least one said wheel is linearly adjustable between at least two positions, spaced apart in the direction of its axis and in each of which positions it can be secured against axial movement.

The construction equipment according to the invention may be, for example, a crane or a prefabricated scaffolding unit but the invention is particularly valuable as applied to access equipment of the type having a working platform or cage which can be elevated. The equipment may be mounted upon a trailer or may itself be directly provided with wheels upon which it is to be towed.

It is sufficient if only one wheel, or the wheels on only one side of the equipment, is/are adjustable provided that, in at least one position of the wheel or wheels, the equipment has a balanced wheel-base for towing purposes. However it is much preferred that both wheels of the or each pair be adjustable, because stability of the equipment in both or all of the positions of adjustment is best achieved in that manner. For convenience, further description herein will refer to adjustment of "the wheels" but it is emphasised that this wording is not intended to exclude from the scope of this invention provision for adjustment of one wheel only.

The wheels may be adjustable, if desired, between only two positions. In the outer, or outermost, position, the lateral wheel-base should be sufficiently great to afford stability of the equipment during towing at normal speeds. In the inner, or innermost, position, the wheels preferably both lie within the overall lateral dimension of the equipment itself, so that the degree of access of which the equipment is capable is determined by the dimensions of the construction equipment itself and not by the spacing apart of the wheels. However, the main consideration is that the adjustment of the wheels makes possible a reduction in the overall lateral dimension of the equipment and this may still be achieved if the wheel adjustment still leaves the wheels projecting to some extent.

In a preferrred form of the invention, an intermediate position of wheel adjustment is provided, in which the lateral wheel-base is reduced to a point at which stabilisers may be lowered, partly or fully, without being impeded but in which the wheels are still sufficiently far apart to afford a stable base for "local" (i.e. short-range) manoeuvring of the equipment, for example by hand. The wheels may be adjustable still further to the innermost position to allow increased access of the equipment, for example to permit it to pass through gateways or doorways.

The necessary adjustability of the wheels may conveniently be achieved by the use of stub-axles, each carrying only one wheel and capable of movement in the direction of the length of the axle. Maximum adjustment is achievable by placing the axles slightly out of alignment with each other and thereby allowing them to overlap. The axles may simply be bolted or otherwise removably secured direct to the main body of the construction equipment or to a subframe thereof. However, much easier adjustment is attained by locating the axles in elongated hollow members, within which they are a slidable fit and in which they can be locked in the desired positions, for example by means of nuts and bolts or better still be means of sprung bolts.

The invention will now be further described by reference to the accompanying drawings, in which:

Fig. 1 is a side elevational view of a part of a towable access unit according to the present invention;

Fig. 2 is a plan view corresponding to Fig. 1; and

Fig. 3 is a front elevational view showing the manner of mounting and adjustment of the wheels of the unit illustrated in Figs. 1 and 2.

Referring to the drawings, the frame 1 of a mobile elevation unit has a pair of road wheels 2, 2, by means of which the unit is supported for towing purposes, and a pair of auxiliary wheels 3, 3, upon which the unit rests in its position of use, before being raised from the ground on outriggers or stabilisers. Thus when the unit is to be towed, it is swung in a clock-wise direction about the auxiliary wheels 3, 3 and then further until it assumes the position illustrated in the drawings.

Each road wheel is carried by a hub 4 mounted on a bracket 5. The bracket 5 is rigidly secured to a square-cross-section pin 6 by means of which the wheel assembly is mounted upon a hollow axle 7. The axle 7 is itself of square cross-section and the pin 6, of smaller dimensions than the axle 7, is rendered a tight fit within the axle by means of tubular rods of polyurethane, inserted in the spaces between the flat faces of the pin 6 and the inner angles of the axle 7. The polyurethane rods, which are compressible to a limited extent, provide a cushioned suspension for the unit and render it safely towable at normal road speeds.

If desired, the pin 6 and/or the hollow axle 7 may have a cross-section other than square, the main consideration being that the pin 6 should not be free to rotate within the axle. The cushioning rods may be of synthetic plastics material other than polyurethane, or may be of natural or synthetic rubber.

Each axle 7 is a sliding fit within a separate hollow member 8, also of square cross-section in the illustrated embodiment. The two

0136049

members 8, 8 lie closely parallel to each other across the frame 1, with the result that the axles 7, 7 overlap and each axle may therefore be almost as long as the width of the unit. The axles supporting the wheels 3, 3 are off-set in a similar manner to ensure that all four wheels have good contact with the ground.

Axles 7, 7 are locked in position within their respective members 8, 8 by means of sprung bolts 9, 9 which cooperate with slots 10 in the axles 7 to give a choice of three locking positions for each axle 7. The most-extended position of the axles 7 is that in which the road wheels are fully retracted to allow the unit to pass through domestic doorways. In the intermediate position, the wheels are sufficiently retracted to permit stabilisers (not shown) to be lowered but they still provide a good stable base for local manoeuvring of the unit into the desired working position.

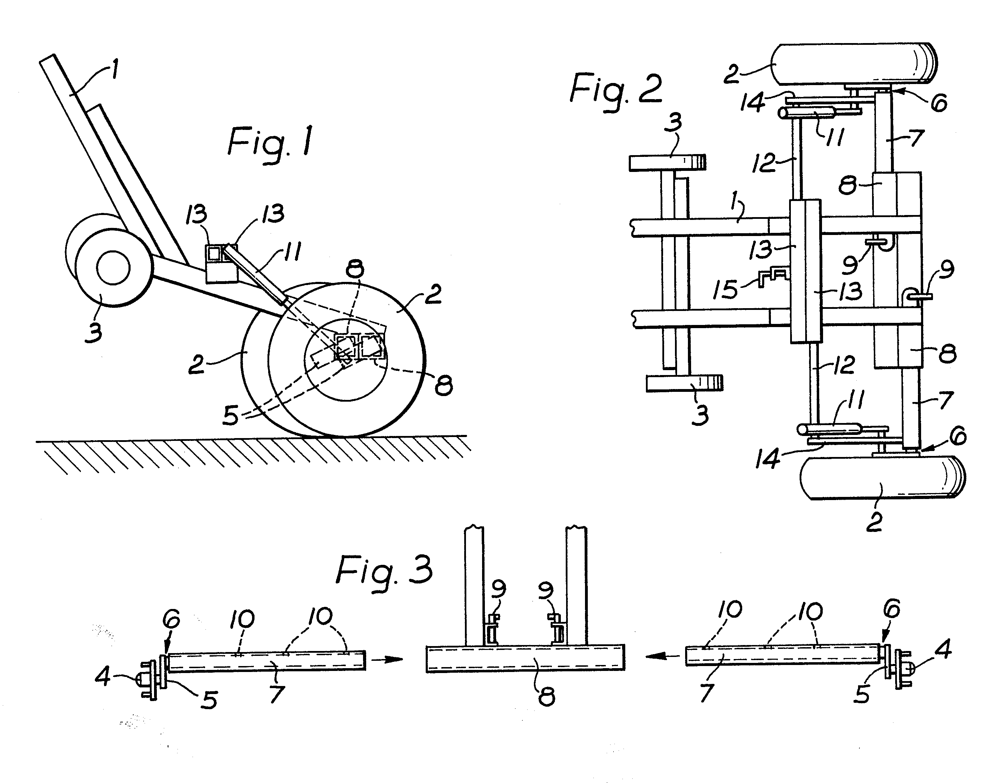

Additional support for the road wheels 2, 2 is afforded in the illustrated embodiment by shock absorbers 11, 11, which provide a cushioned linkage between each bracket 5 and a shock absorber carrier 12. Each shock absorber carrier 12 is slidably mounted within a member 13, mounted transversely on the frame 1. A flat strap 14 (see fig. 2) secures each carrier 12 to the corresponding axle 7, so that the carrier 12 is extended with the axle 7 when the wheels 2 are moved to their outer positions. In these latter positions, the shock absorber carriers 12 are locked by sprung bolts 15.

-6-

0136049

CLAIMS

1. Construction equipment provided with wheels to render it towable, characterised in that at least one said wheel is linearly adjustable between at least two positions, spaced apart in the direction of its axis and in each of which positions it can be secured against axial movement.

2. Construction equipment according to claim 1, haing at least two road wheels for towing purposes, each of said wheels being linearly adjustable.

3. Construction equipment according to claim 1 or claim 2, wherein said at least two wheel positions comprise an outermost position giving a lateral wheel-base sufficient to afford stability for towing and an innermost position wherein the wheels lie within, or nearly within, the overall lateral dimension of the equipment itself.

4. Construction equipment according to any of the preceding claims, wherein said wheels are also securable in an intermediate position, in which the lateral wheel-base is sufficient to afford stability for manual manoeuvring.

5. Construction equipment according to any of the preceding claims, wherein each linearly adjustable wheel is mounted on a separate stub-axle, which is capable of movement in the direction of the length of said axle.

6.  Construction equipment according to claim 5, wherein the stub-axles of each wheel of an oppposed pair are capable of linear overlap.

7.  Construction equipment according to claim 5 or claim 6, wherein each said stub-axle is a slidable fit within an elongated hollow member.

8.  Construction equipment according to claim 7, wherein each said stub-axle may be locked in linear position within said elongated hollow member by a sprung bolt.

9.  Construction equipment according to any of the preceding claims, having also shock absorbers to afford further cushioning of said road wheels.

10.  Construction equipment, specifically access equipment having a working platform or cage which may be elevated and being provided with two wheels for towing, characterised in that each said wheel is mounted upon a separate stub-axle which is located in an elongated hollow member within which said stub-axle is a sliding fit, said stub-axles each thereby being linearly adjustable and being securable in at least two of its linear positions.

*Fig. 1*

*Fig. 2*

*Fig. 3*

1/1

0136049